# EUROPÄISCHE PATENTSCHRIFT

(11) **EP 3 115 265 B1**
(45) Veröffentlichungstag und Bekanntmachung des Hinweises auf die Patenterteilung: **23.10.2019**
(21) Anmeldenummer: 16177693.5
(22) Anmeldetag: 04.07.2016
(51) Int. Cl.: B60S 1/52

(54) **REINIGUNGSEINRICHTUNG FÜR EINEN WISCHARM EINER SCHEIBENWISCHANLAGE, WISCHARM UND SCHEIBENWISCHANLAGE**
CLEANING DEVICE FOR A WIPER ARM OF A WINDSCREEN WIPER SYSTEM, WIPER ARM AND A WINDSCREEN WIPER SYSTEM
DISPOSITIF DE NETTOYAGE POUR UN BALAI D'UNE INSTALLATION D'ESSUIE-GLACE, BALAI ET INSTALLATION D'ESSUIE-GLACE

(30) Priorität: 07.07.2015 DE 102015110987
(43) Veröffentlichungstag der Anmeldung: 11.01.2017
(73) Patentinhaber: Valeo Systèmes d'Essuyage, 78322 Le Mesnil Saint Denis (FR)
(72) Erfinder: SCHAEUBLE, Michael, 71665 VAIHINGEN/ENZ (DE)
(74) Vertreter: Vincent, Catherine Marie Marguerite

(56) Entgegenhaltungen:
- EP-A1- 1 985 513
- DE-A1-102013 212 397
- FR-A1- 2 902 063
- JP-A- 2002 370 625
- US-A- 3 432 876

## Beschreibung

### Stand der Technik

Die Erfindung betrifft eine Reinigungseinrichtung für einen Wischarm einer Scheibenwischanlage nach dem Oberbegriff des Anspruchs 1. Ferner betrifft die Erfindung einen Wischarm für eine erfindungsgemäße Reinigungseinrichtung sowie eine Scheibenwischanlage mit einer Reinigungseinrichtung sowie einem Wischarm.

Eine Reinigungseinrichtung nach dem Oberbegriff des Anspruchs 1 ist aus der nachveröffentlichten EP14306557.1 der Anmelderin und aus US 3 432 876 A bekannt. Die bekannte Reinigungseinrichtung ist über eine Rastverbindung, die ein Clipelement an der Reinigungseinrichtung aufweist, mit der Außenseite eines Wischarms verbunden. Hierzu weist der Wischarm an einer Seitenwand eine Aussparung auf, in die die Reinigungseinrichtung mit dem Clipelement eingreift. Einzelheiten bezüglich der Rastverbindung bzw. des Clipelements sind der genannten Anmeldung jedoch nicht zu entnehmen.

Darüber hinaus ist es aus der DE 10 2004 007 351 A1 bekannt, eine Reinigungseinrichtung mit einer Sprühdüse innerhalb des Querschnitts des Wischarms zu integrieren, wobei der Wischarm im Bereich der Reinigungseinrichtung in seiner Breite vergrößert ausgebildet ist. Die Anordnung bzw. Montage einer derartigen Reinigungseinrichtung gestaltet sich in der Praxis relativ schwierig. Insbesondere ist ein separater Austausch einer derartigen Reinigungseinrichtung zu Reparatur- oder Wartungszwecken für einen Anwender in der Praxis nur sehr schwierig durchzuführen.

Wünschenswert ist daher eine Reinigungseinrichtung, die sich besonders einfach an einem Wischarm montieren bzw. demontieren lässt und eine sichere Befestigung an dem Wischarm ermöglicht. Insbesondere soll auch das Lösen der Reinigungseinrichtung von dem Wischarm infolge einer in einer einzigen Richtung wirkenden Lösekraft, wie sie beispielsweise von Waschbürsten in einer Fahrzeugreinigungsanlage bzw. Waschstrasse erzeugt wird, sicher vermieden werden.

### Offenbarung der Erfindung

Ausgehend von dem dargestellten Stand der Technik liegt der Erfindung die Aufgabe zugrunde, eine Reinigungseinrichtung für einen Wischarm einer Scheibenwischanlage nach dem Oberbegriff des Anspruchs 1 derart weiterzubilden, dass sich diese einerseits möglichst einfach, rasch und zuverlässig an dem Wischarm befestigen bzw. lösen lässt, und andererseits das (unbeabsichtigte) Lösen der Reinigungseinrichtung von dem Wischarm infolge von auf die Reinigungseinrichtung wirkenden Kräften zuverlässig vermieden wird.

Diese Aufgabe wird erfindungsgemäß bei einer Reinigungseinrichtung für einen Wischarm einer Scheibenwischanlage mit den kennzeichnenden Merkmalen des Anspruchs 1 dadurch gelöst, dass die Reinigungseinrichtung erste Führungsmittel aufweist, die dazu ausgebildet sind, die Reinigungseinrichtung zum Ausbilden der zwischen der Reinigungseinrichtung und dem Wischarm ausbildbaren Rastverbindung in einer Drehachse drehen zu können. Mit anderen Worten gesagt bedeutet dies, dass die Befestigung der Reinigungseinrichtung und somit auch ggf. ein Lösen der Reinigungseinrichtung von einem Wischarm durch eine Drehbewegung erfolgt. Eine derartige Drehbewegung, bei der auf die Reinigungseinrichtung zur Montage bzw. Demontage ein in Richtung der angesprochenen Drehachse wirkendes Drehmoment ausgeübt werden muss, stellt eine besonders sichere zuverlässige Befestigung der Reinigungseinrichtung an dem Wischarm dar.

Vorteilhafte Weiterbildungen der erfindungsgemäßen Reinigungseinrichtung sind in den Unteransprüchen aufgeführt. In den Rahmen der Erfindung fallen sämtliche Kombinationen aus zumindest zwei von in den Ansprüchen, der Beschreibung und/oder den Figuren offenbarten Merkmalen.

Nach der Erfindung ist es vorgesehen, dass die (ersten) Führungsmittel als wenigstens ein von dem wenigstens einen Rastelement separates Element ausgebildet sind. Dadurch lassen sich sowohl das Rastelement als auch die ersten Führungsmittel hinsichtlich ihrer Funktionalität optimieren.

In Weiterbildung des zuletzt genannten Vorschlags ist es vorgesehen, dass die ersten Führungsmittel wenigstens einen, vorzugsweise mehrere Fortsätze aufweisen, die dazu ausgebildet sind, in eine Aufnahmeöffnung des Wischarms hineinzuragen. Derartige Fortsätze lassen sich insofern besonders einfach an der Reinigungseinrichtung realisieren, als dass diese üblicherweise als Kunststoffspritzgussteil ausgebildet ist, so dass das (einstückige) Anformen von Fortsätzen sich einfach in das Design der Reinigungseinrichtung bzw. den Fertigungsprozess der Reinigungseinrichtung integrieren lässt.

Besonders bevorzugt ist eine konstruktive Ausbildung unter Verwendung wenigstens zweier Fortsätze, die auf einem gemeinsamen Teilkreisdurchmesser um die Drehachse in vorzugsweise gleichgroßen Winkelabständen zueinander angeordnet sind.

Um den wenigstens einen Fortsatz hinsichtlich einer in Richtung der Drehachse verlaufenden Richtung an dem Wischarm zu arretieren bzw. zu fixieren ist es vorgesehen, dass der wenigstens eine Fortsatz einen im Querschnitt vergrößerten Kopfbereich aufweist, der dazu ausgebildet ist, einen Wandabschnitt des Wischarms zu hintergreifen.

Die Erfindung umfasst auch einen Wischarm für eine soweit beschriebene erfindungsgemäße Reinigungseinrichtung, wobei der Wischarm einen Aufnahmebereich zur Befestigung eines Wischblatts mittels einer Befestigungseinrichtung des Wischblatts aufweist, wobei der Wischarm dazu ausgebildet ist, mit der erfindungsgemäßen Reinigungseinrichtung eine Rastverbindung auszubilden, und wobei die Rastverbindung an dem Wischarm wenigstens eine Rastaufnahme aufweist, die dazu ausgebildet ist, mit wenigstens einem elastisch ausgebildeten Rastelement bzw. einem Clipelement an der Reinigungseinrichtung zusammenzuwirken. Erfindungsgemäß ist es vorgesehen, dass an dem Wischarm zweite Führungsmittel vorgesehen sind, die dazu ausgebildet sind, die Reinigungseinrichtung zum Ausbilden der Rastverbindung relativ zum Wischarm in einer Drehachse drehen zu können.

In Analogie zu den ersten Führungsmitteln bzw. dem wenigstens einen Rastelement an der Reinigungseinrichtung ist es in analoger Weise an dem Wischarm nach der Erfindung vorgesehen, dass die zweiten Führungsmittel als von der wenigstens einen Rastaufnahme separates Element ausgebildet sind. Somit lassen sich sowohl die zweiten Führungsmittel als auch die Rastaufnahme hinsichtlich ihrer Funktionalität optimieren.

In konstruktiv bevorzugter Ausgestaltung der zweiten Führungsmittel weisen diese wenigstens eine Aufnahmeöffnung auf, die dazu ausgebildet ist, mit einem Fortsatz der Reinigungseinrichtung zusammenzuwirken. Eine derartige Aufnahmeöffnung ist dabei vorzugsweise in Form einer kreisbogenabschnittsförmigen Führungsbahn ausgebildet.

Zuletzt umfasst die Erfindung auch eine Scheibenwischanlage mit einer erfindungsgemäßen Reinigungseinrichtung und einem soweit beschriebenen Wischarm, wobei die Rastverbindung die Reinigungseinrichtung in einer in der Drehachse verlaufenden Richtung an dem Wischarm fixiert.

Um eine möglichst einfachen Ein- bzw. Ausbau der Reinigungseinrichtung an dem Wischarm zu ermöglichen, ist es besonders bevorzugt vorgesehen, dass die Reinigungseinrichtung an einer Außenseite des Wischarms angeordnet ist.

Um darüber hinaus für die aus der Reinigungseinrichtung austretende Reinigungsflüssigkeit eine möglichst große Reichweite in Längsrichtung des Wischblatts zu ermöglichen, ist es darüber hinaus vorgesehen, dass die Reinigungseinrichtung im Bereich des Aufnahmebereichs für das Wischblatt angeordnet ist. Dieser Aufnahmebereich ist mit Blick auf die axiale Erstreckung des Wischblatts üblicherweise in der Wischblattmitte angeordnet, so dass durch eine entsprechende Anordnung bzw. Ausgestaltung von Sprühdüsen eine gleichmäßige Beaufschlagung einer Fahrzeugscheibe über die Längserstreckung des Wischblatts ermöglicht wird.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine perspektivische Ansicht auf eine Scheibenwischanlage,
- Fig. 2: eine Seitenansicht auf den Wischarm der Scheibenwischanlage gemäß Fig. 1 im Bereich der Reinigungseinrichtung,
- Fig. 3: einen Querschnitt durch den Wischarm in der Ebene III-III der Fig. 2,
- Fig. 4: einen Längsschnitt durch den Wischarm der Fig. 2 in der Ebene IV-IV der Fig. 2 ,
- Fig. 5: einen Schnitt in der Ebene V-V der Fig. 3,
- Fig. 6 bis Fig. 8: den Montageprozess einer ersten erfindungsgemäßen Reinigungseinrichtung im Bereich des Wischarms in jeweils teilweise geschnittener, perspektivischer Darstellung und
- Fig. 9 und Fig. 10: eine an einem Wischarm montierte, gegenüber den Fig. 6 bis 8 alternativ ausgebildete Reinigungseinrichtung, ebenfalls in jeweils teilweise geschnittener, perspektivischer Darstellung.

Gleiche Elemente bzw. Elemente mit gleicher Funktion sind in den Figuren mit den gleichen Bezugsziffern versehen.

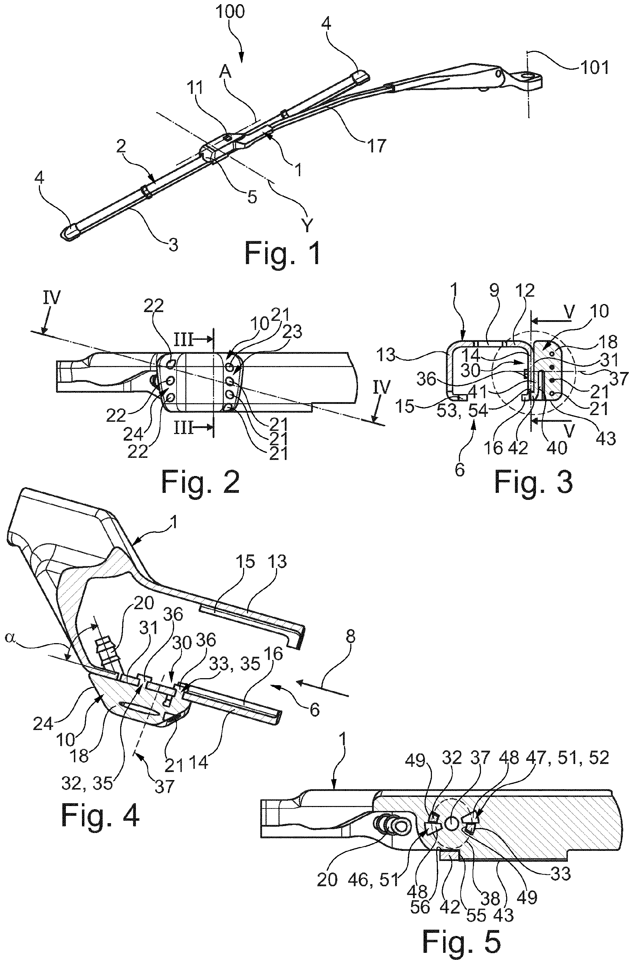

In der Fig. 1 ist eine Scheibenwischanlage 100 zum Reinigen einer nicht gezeigten Fahrzeugscheibe gezeigt. Die Scheibenwischanlage 100 weist einen um eine Achse 101 schwenkbar angeordneten Wischarm 1 auf, dessen der Achse 101 abgewandter Endbereich mit einem an sich bekannten Wischblatt 2 verbunden ist. Das Wischblatt 2 weist insbesondere einen Wischgummi 3 mit einer Wischlippe auf, die an der Fahrzeugscheibe anliegt. Auf der der Fahrzeugscheibe abgewandten Oberseite weist das Wischblatt 2 beispielsweise einen spoilerartig geformten Abschnitt bzw. Querschnitt auf. Das Wischblatt 2 erstreckt sich entlang einer Längsachse A und ist um eine Schwenkachse Y an dem Wischarm 1 beweglich angeordnet, um sich beim Bewegen entlang der Fahrzeugscheibe insbesondere der Krümmung der Fahrzeugscheibe optimal anpassen zu können. Die stirnseitigen Endbereiche des Wischblatts 2 sind mit jeweils einem Endstück 4 verbunden.

Zur auswechselbaren Befestigung des Wischblatts 2 an dem Wischarm 1 weist das Wischblatt 2 einen an sich bekannten Wischblattadapter 5 auf, mittels dem das Wischblatt 2 in einen im Wesentlichen U-förmigen Aufnahmebereich 6 des Wischarms 1 aus Richtung des Pfeils 8 einführbar bzw. entgegen der Richtung des Pfeils 8 aus dem Aufnahmebereich 6 herausziehbar ist (Fig. 4). Zur Arretierung bzw. Fixierung des Wischblatts 2 in dem Aufnahmebereich 6 weist der Wischarm 1 an seiner Oberseite eine beispielhaft im Querschnitt rechteckförmige Aussparung 9 auf, in die zur Ausbildung einer Rastverbindung zwischen dem Wischblatt 2 und dem Wischarm 1 ein an dem Wischblatt 5 angeordnetes, in Form eines Druckknopfes 11 ausgebildetes Rastelement hineinragt (siehe Fig. 1).

Wie am besten anhand der Fig. 3 erkennbar ist, weist der Aufnahmebereich 6 des Wischarms 1 zwei von der Oberseite 12 des Wischarms 1 abragende, zueinander parallel angeordnete Seitenwände 13, 14 auf. Von den Seitenwänden 13, 14 ragen auf der der Oberseite 12 abgewandten Seite nach innen Halteabschnitte 15, 16 ab. Innerhalb des so ausgebildeten Aufnahmebereichs 6 ist das Wischblatt 2 mit dem Wischblattadapter 5 fixiert aufgenommen.

An der einen Seitenwand 14 des Wischarms 1, die auf der einer Wischstange 17 des Wischarms 1 abgewandten Seite angeordnet ist, ist eine erfindungsgemäße Reinigungseinrichtung 10 angeordnet.

Die Reinigungseinrichtung 10 besteht zumindest im Wesentlichen aus Kunststoff und ist als Kunststoffspritzgussteil ausgebildet. Die Reinigungseinrichtung 10 weist einen im Wesentlichen block- bzw. quaderförmigen Körper 18 auf, von dem ein Zulaufstutzen 20 abragt, über den das Ende einer nicht gezeigten Schlauchleitung übergeschoben werden kann, um die Reinigungseinrichtung 10 mit Reinigungsflüssigkeit zu versorgen. Die angesprochene Schlauchleitung ist dabei insbesondere innerhalb des Querschnitts des Wischarms 1 geführt, wobei entsprechend der Darstellung der Fig. 4 der Zulaufstutzen 20 bei an dem Wischarm 1 montierter Reinigungseinrichtung 10 innerhalb des Aufnahmebereichs 6 angeordnet ist, und um einen Winkel α zur Seitenwand 14 verläuft.

An der Außenfläche des Körpers 12 sind mehrere Sprühdüsen mit Sprühöffnungen 21, 22 angeordnet bzw. ausgebildet, die über den Zulaufstutzen 20 mit der Reinigungsflüssigkeit versorgt werden. Während beispielhaft an einer schräg angeordneten vorderen Stirnfläche 23 des Körpers 18 entsprechend der Darstellung der Fig. 3 vier übereinander angeordnete Sprühöffnungen 21 ausgebildet sind, sind an einer hinteren, ebenfalls schräg angeordneten Stirnfläche 24 drei übereinander angeordnete Sprühöffnungen 22 vorgesehen. Die Sprühstrahlen des Reinigungsmittels bzw. die Sprühöffnungen 21, 22 sind derart zum Wischblatt 2 ausgerichtet, dass Reinigungsflüssigkeit insbesondere in Längsrichtung bzw. in Richtung der Längsachse A vor das Wischblatt 2 auf die Fahrzeugscheibe 1 auftrifft, wobei durch entsprechende Winkel der Sprühdüsen 21, 22 die Reinigungsflüssigkeit möglichst gleichmäßig über den Längsbereich des Wischblatts 2 bzw. die Fahrzeugscheibe verteilt wird.

Die Verbindung zwischen der Reinigungseinrichtung 10 bzw. dem Körper 18 und dem Wischarm 1 erfolgt über eine Rastverbindung 30. Die Rastverbindung 30 umfasst an einer der Seitenwand 14 des Wischblatts 2 zugewandten Seitenfläche 31 des Körpers 18 zwei von der Seitenfläche 31 rechtwinklig abstehende Fortsätze 32, 33, die zusammen erste Führungsmittel 35 für die Reinigungseinrichtung 10 ausbilden. Wie am besten anhand der Fig. 4 sowie 6 bis 8 erkennbar ist, weisen die Fortsätze 32, 33 auf der der Seitenfläche 31 abgewandten Seite einen im Querschnitt vergrößerten Kopfbereich 36 auf, der dazu ausgebildet ist, bei an dem Wischarm 1 montierter Reinigungseinrichtung 10 die Reinigungseinrichtung 10 in einer in Richtung einer Achse 37 (Fig. 4 und 5) verlaufenden Richtung an dem Wischarm 1 zu fixieren bzw. zu befestigen. Dies erfolgt dadurch, dass die Kopfbereiche 36 der Fortsätze 32, 33 die Seitenwand 14 des Wischarms 1 hintergreifen bzw. an der Innenseite der Seitenwand 14 formschlüssig anliegen. Die Achse 37 verläuft senkrecht zur Seitenwand 14 des Wischarms 1 und zur Seitenfläche 31 der Reinigungseinrichtung 10.

Die Fortsätze 32, 33 sind auf einem Teilkreisdurchmesser 38 um die Achse 37, vorzugsweise in gleichgroßen Winkelabständen zueinander angeordnet. Im dargestellten Ausführungsbeispiel sind die beiden Fortsätze 32, 33 somit um 180° zueinander versetzt angeordnet (Fig. 5).

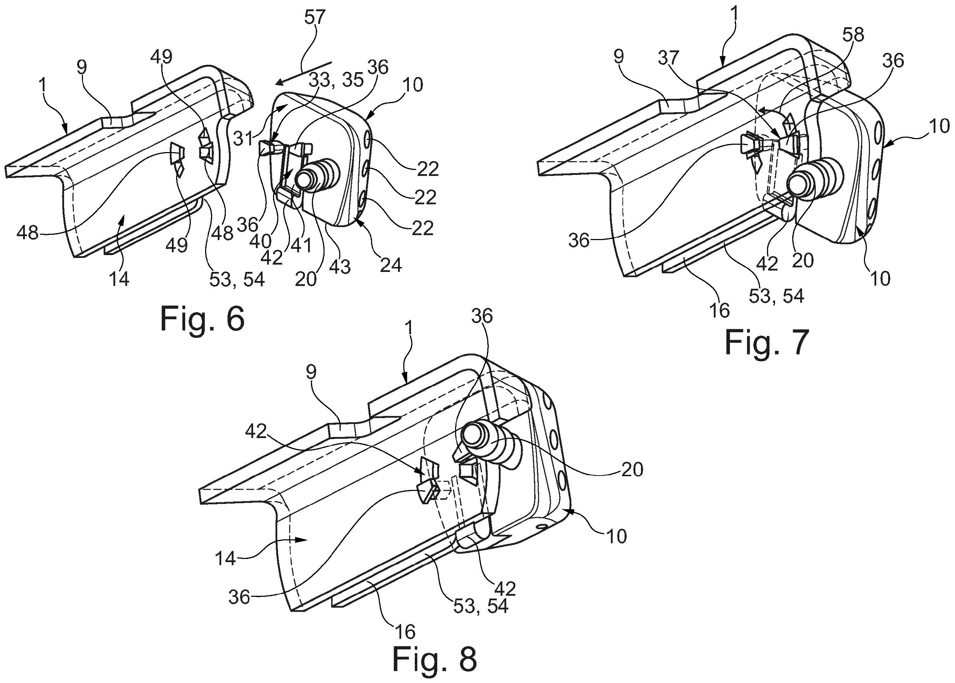

Weiterhin ist an dem Körper 18 der Reinigungseinrichtung 10 ein elastisch ausgebildetes Clipelement in Form eines Rastelements 40 einstückig angeformt. Das Rastelement 40 weist, wie am besten anhand der Fig. 3 und 6 erkennbar ist, eine Rastzunge 41 auf, an deren einem Endbereich ein Rastvorsprung 42 angeformt ist. Die Rastzunge 41 verläuft in etwa rechtwinklig zu einer Unterseite 43 des Körpers 18 und der Rastvorsprung 42 ragt über die Seitenfläche 31 des Körpers 18, wie die Fortsätze 32, 33 hinaus und schließt in etwa bündig mit der Unterseite 43 ab.

Die Seitenwand 14 des Wischarms 1 weist für jeden der beiden Fortsätze 32, 33 entsprechend der Darstellung der Fig. 5 und 6 jeweils eine als Durchbruch ausgebildete Aufnahmeöffnung 46, 47 auf (Fig. 5). Die beiden Aufnahmeöffnungen 46, 47 sind ebenfalls im Bereich des Teilkreisdurchmessers 38 um 180° zueinander versetzt angeordnet bzw. ausgebildet. Jede der beiden Aufnahmeöffnungen 46, 47 weist eine im Querschnitt vergrößert ausgebildeten Montageabschnitt 48 auf, an den sich ein Führungsabschnitt 49 anschließt. Während der Querschnitt des Montageabschnitts 48 wenigstens so groß ist wie der Querschnitt des Kopfbereichs 36 der Fortsätze 32, 33, d.h. dazu geeignet ist, den Kopfbereich 36 durch den Montageabschnitt 48 hindurchzuführen, ist der Querschnitt des Führungsabschnitts 49 an den Querschnitt der Fortsätze 32, 33 im Bereich eines Zwischenabschnitts 50 der Fortsätze 32, 33 angepasst, der die Fortsätze 32, 33 mit der Seitenfläche 31 des Körpers 18 verbindet.

Die Montageabschnitte 48 bilden zusammen mit den Führungsabschnitten 49 jeweils eine kreisbogenabschnittsförmige Führungsbahn 51 für die Fortsätze 32, 33 aus. Darüber hinaus bilden die Aufnahmeöffnungen 46, 47 zweite Führungsmittel 52 aus, die zusammen mit den ersten Führungsmitteln 35 bzw. den Fortsätzen 32, 33 die Rastverbindung 30 bilden.

Weiterhin weist der Wischarm 1 im Bereich des einen Halteabschnitts 16 eine Aussparung 53 auf, die als Rastaufnahme 54 für den Rastvorsprung 42 des Rastelements 40 der Reinigungseinrichtung 10 dient. Wie am besten anhand der Fig. 5 erkennbar ist, weist die Aussparung 53 eine vordere Anschlagkante 55 und eine obere Anschlagkante 56 auf, die beim Einrasten des Rastvorsprungs 42 jeweils als Anschlag dienen bzw. eine weitere Bewegung des Rastvorsprungs 42 bzw. der Reinigungseinrichtung 10 verhindern.

Aus den oben stehenden Erläuterungen ist ersichtlich, dass an der Reinigungseinrichtung 10 die Elemente zur Ausbildung der Rastverbindung 30 zum einen die beiden Fortsätze 32, 33 umfassen, die die ersten Führungsmittel 53 ausbilden, und zum anderen das Rastelement 40. Insbesondere sind die ersten Führungsmittel 35 und das Rastelement 40 als voneinander separate Elemente ausgebildet. In ähnlicher Art und Weise sind auch an dem Wischarm 1 die zweiten Führungsmittel 52 und die Rastaufnahme 54 als voneinander getrennte Elemente bzw. Aussparungen ausgebildet.

Die Montage der Reinigungseinrichtung 10 an dem Wischarm 1 wird nachfolgend anhand der Fig. 6 bis 8 wie folgt erläutert: Zunächst wird entsprechend der Fig. 6 die Reinigungseinrichtung 10 derart zum Wischarm 1 ausgerichtet, dass die Fortsätze 32, 33 mit den Montageabschnitten 48 der Aufnahmeöffnung 46, 47 fluchten. Anschließend wird die Reinigungseinrichtung 10 entsprechend der Richtung des Pfeils 57 gegen die Seitenwand 14 des Wischarm 1 bewegt. Dabei durchdringen die Fortsätze 32, 33 die Montageabschnitte 48 der Aufnahmeöffnungen 46, 47, bis die Seitenfläche 31 des Körpers 18 der Reinigungseinrichtung 10 an der Seitenwand 14 des Wischarms 1 anliegt. Dieser Zustand ist in der Fig. 7 dargestellt. Anschließend wird die Reinigungseinrichtung 10 entsprechend der Richtung des Pfeils 58 um die Achse 37 gedreht. Dabei gelangen die Kopfbereiche 36 der Fortsätze 32, 33 in Wirkverbindung mit der Innenseite der Seitenwand 14 und verhindern damit, dass die Reinigungseinrichtung 10 von dem Wischarm 1 (entgegen der Richtung des Pfeils 57) entfernt werden kann. Gleichzeitig gelangt beim weiteren Drehen der Reinigungseinrichtung 10 um die Achse 37 der zunächst elastisch eingedrückte Rastvorsprung 42 des Rastelements 40 in den Bereich der Aussparung 53 an den Wischarm 1. Sobald die Reinigungseinrichtung 10 an dem Wischarm 1 ihre Sollposition bzw. Sollwinkellage erreicht hat, welches durch eine entsprechende Länge der Führungsbahnen 49 gewährleistet ist, verrastet auch der Rastvorsprung 42 des Rastelements 40 mit der Rastaufnahme 54 am Wischarm 1. Dadurch wird eine weitere Bewegung der Reinigungseinrichtung 10 an dem Wischarm 1 in beide Drehrichtungen verhindert. Dieser Einbauzustand ist in der Fig. 8 dargestellt.

Zum Lösen der Rastverbindung 30 bzw. zur Demontage der Reinigungseinrichtung 10 ist es erforderlich, das Rastelement 40 im Bereich des Rastvorsprungs 42 in Richtung zum Körper 18 hin einzudrücken, was durch eine entsprechende Aussparung 59 am Körper 18, in der das Rastelement 40 angeordnet ist, erzielbar ist.

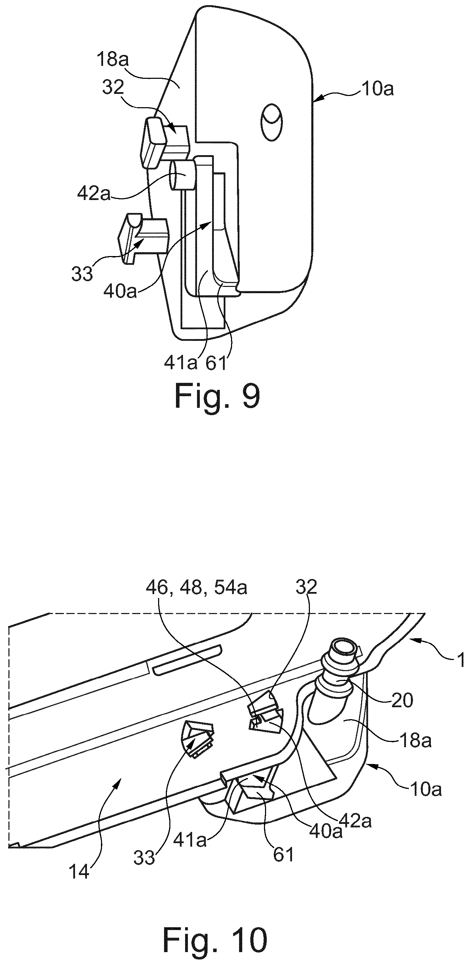

In den Fig. 9 und 10 ist eine modifizierte Reinigungseinrichtung 10a dargestellt. Die Reinigungseinrichtung 10a unterscheidet sich von der Reinigungseinrichtung 10 dadurch, dass das Rastelement 40a über einen Verbindungsabschnitt 61, der im Bereich der Unterseite 43 des Körpers 18a angeordnet ist, mit einer Rastzunge 41a verbunden ist. Der an der Rastzunge 41a angeordnete Rastvorsprung 42a endet in einem etwa mittleren Bereich des Körpers 18a nahe des einen Fortsatzes 32. Insbesondere weist der Rastvorsprung 42a eine Querschnittsfläche auf, die der Querschnittsfläche der Aufnahmeöffnung 46 im Bereich des Montageabschnitts 48 entspricht.

Die Montage der Reinigungseinrichtung 10a an dem Wischarm 1 erfolgt in analoger Weise zur Reinigungseinrichtung 10. Im Unterschied hierzu ist jedoch in der in der Fig. 10 erkennbaren Endstellung der Reinigungseinrichtung 10a der Rastvorsprung 42a im Bereich des Montageabschnitts 48 der Aufnahmeöffnung 46 angeordnet, das bedeutet, dass der Montageabschnitt 48 die Rastaufnahme 54a ausbildet. Es kann somit auf eine am Wischarm 1 ausgebildete, separate Rastaufnahme 54 verzichtet werden.

Die soweit beschriebene Scheibenwischanlage 100 bzw. die Reinigungseinrichtung 10, 10a und der Wischarm 1 können in vielfältiger Art und Weise abgewandelt bzw. modifiziert werden, ohne vom Erfindungsgedanken abzuweichen.

### Bezugszeichenliste

- 1: Wischarm
- 2: Wischblatt
- 3: Wischgummi
- 4: Endstück
- 5: Wischblattadapter
- 6: Aufnahmebereich
- 8: Pfeil
- 9: Aussparung
- 10, 10a: Reinigungseinrichtung
- 11: Druckknopf
- 12: Oberseite
- 13: Seitenwand
- 14: Seitenwand
- 15: Halteabschnitt
- 16: Halteabschnitt
- 17: Wischstange
- 18, 18a: Körper
- 20: Zulaufstutzen
- 21: Sprühöffnung
- 22: Sprühöffnung
- 23: Stirnfläche
- 24: Stirnfläche
- 30: Rastverbindung
- 31: Seitenfläche
- 32: Fortsatz
- 33: Fortsatz
- 35: Führungsmittel
- 36: Kopfbereich
- 37: Achse
- 38: Teilkreisdurchmesser
- 40, 40a: Rastelement
- 41, 41a: Rastzunge, Seitenfläche
- 42, 42a: Rastvorsprung
- 43: Unterseite
- 46: Aufnahmeöffnung
- 47: Aufnahmeöffnung
- 48: Montageabschnitt
- 49: Führungsabschnitt
- 50: Zwischenabschnitt
- 51: Führungsbahn
- 52: Führungsmittel
- 53: Aussparung
- 54, 54a: Rastaufnahme
- 55: Anschlagkante
- 56: Anschlagkante
- 57: Pfeil
- 58: Pfeil
- 59: Aussparung
- 61: Verbindungsabschnitt

- 100: Scheibenwischanlage
- 101: Achse

- A: Längsachse
- Y: Schwenkachse

- α: Winkel

## Patentansprüche

1. Reinigungseinrichtung (10; 10a) für einen Wischarm (1) einer Scheibenwischanlage (100), wobei die Reinigungseinrichtung (10; 10a) wenigstens eine Sprühdüse (21, 22) für eine Reinigungsflüssigkeit aufweist, wobei die Reinigungseinrichtung (10; 10a) dazu ausgebildet ist, an dem Wischarm (1) eine Rastverbindung (30) auszubilden, und wobei die Rastverbindung (30) an der Reinigungseinrichtung (10; 10a) wenigstens ein Clipelement in Form eines elastisch ausgebildeten Rastelements (40; 40a) aufweist, das dazu ausgebildet ist, mit einer Rastaufnahme (54; 54a) am Wischarm (1) zusammenzuwirken,
**dadurch gekennzeichnet,**
**dass** die Reinigungseinrichtung (10; 10a) erste Führungsmittel (35) aufweist, die dazu ausgebildet sind, die Reinigungseinrichtung (10; 10a) zum Ausbilden der Rastverbindung (30) in einer Drehachse (37) drehen zu können, und
**dass** die ersten Führungsmittel (35) als wenigstens ein von dem wenigstens einen Rastelement (40; 40a) separates Element ausgebildet sind.

2. Reinigungseinrichtung nach Anspruch 1,
**dadurch gekennzeichnet,**
**dass** die ersten Führungsmittel (35) wenigstens einen, vorzugsweise mehrere Fortsätze (32, 33) aufweisen, die dazu ausgebildet sind, in eine Aufnahmeöffnung (46, 47) des Wischarms (1) hineinzuragen.

3. Reinigungseinrichtung nach Anspruch 2,
**dadurch gekennzeichnet,**
**dass** wenigstens zwei Fortsätze (32, 33) vorgesehen sind, die auf einem gemeinsamen Teilkreisdurchmesser (38) um die Drehachse (37) in vorzugsweise gleichgroßen Winkelabständen zueinander angeordnet sind.

4. Reinigungseinrichtung nach Anspruch 2 oder 3,
**dadurch gekennzeichnet,**
**dass** der wenigstens eine Fortsatz (32, 33) einen im Querschnitt vergrößerten Kopfbereich (36) aufweist, der dazu ausgebildet ist, eine Wand (14) des Wischarms (1) zu hintergreifen.

5. Reinigungseinrichtung nach einem der Ansprüche 1 bis 4,
**dadurch gekennzeichnet,**
**dass** die Reinigungseinrichtung (10; 10a) als ein aus Kunststoff bestehendes Spritzgußteil ausgebildet ist, und dass das Rastelement (40; 40a) als Rastvorsprung (42; 42a) einstückig an der Reinigungseinrichtung (10; 10a) angeformt ist.

6. Wischarm (1) für eine Reinigungseinrichtung (10; 10a), die nach einem der Ansprüche 1 bis 5 ausgebildet ist, mit einem Aufnahmebereich (6) zur Befestigung eines Wischblatts (2) mittels einer Befestigungseinrichtung (5) des Wischblatts (2), wobei der Wischarm (1) dazu ausgebildet ist, mit der Reinigungseinrichtung (10; 10a) eine Rastverbindung (30) auszubilden, und wobei die Rastverbindung (30) an dem Wischarm (1) wenigstens eine Rastaufnahme (54; 54a) aufweist, die dazu ausgebildet ist, mit wenigstens einem elastisch ausgebildeten Rastelement (40; 40a) an der Reinigungseinrichtung (10; 10a) zusammenzuwirken,
**dadurch gekennzeichnet,**
**dass** an dem Wischarm (1) zweite Führungsmittel (52) vorgesehen sind, die dazu ausgebildet sind, die Reinigungseinrichtung (10; 10a) zum Ausbilden der Rastverbindung (30) relativ zum Wischarm (1) in einer Drehachse (37) drehen zu können und dass die zweiten Führungsmittel (52) als von der wenigstens einen Rastaufnahme (54; 54a) separates Element ausgebildet sind.

7. Wischarm nach Anspruch 6 ,
**dadurch gekennzeichnet,**
**dass** die zweiten Führungsmittel (52) wenigstens eine Aufnahmeöffnung (46, 47) aufweist, die dazu ausgebildet ist, mit wenigstens einem Fortsatz (32, 33) an der Reinigungseinrichtung (10; 10a) zusammenzuwirken.

8. Wischarm nach Anspruch 7,
**dadurch gekennzeichnet,**
**dass** die wenigstens eine Aufnahmeöffnung (46, 47) eine vorzugsweise kreisbogenabschnittsförmige Führungsbahn (51) für den wenigstens einem Fortsatz (32, 33) ausbildet.

9. Wischarm nach Anspruch 7 oder 8,
**dadurch gekennzeichnet,**
**dass** die wenigstens eine Aufnahmeöffnung (46, 47) an einer der Reinigungseinrichtung (10; 10a) zugewandten Wand (14) des Wischarms (1) ausgebildet ist.

10. Wischarm nach einem der Ansprüche 6 bis 9
**dadurch gekennzeichnet,**
**dass** die Rastaufnahme (54) an einer dem Wischblatt (2) zugewandten Unterseite (43) des Aufnahmebereichs (6) des Wischarms (1) angeordnet ist.

11. Wischarm nach einem der Ansprüche 7 bis 9,
**dadurch gekennzeichnet,**
**dass** die Rastaufnahme (54a) an einer Wand (14) des Aufnahmebereichs (6) des Wischarms (1) im Bereich einer Aufnahmeöffnung (46) angeordnet ist.

12. Scheibenwischanlage (100), mit einer Reinigungseinrichtung (10; 10a) nach einem der Ansprüche 1 bis 5 und einem Wischarm (1) nach einem der Ansprüche 6 bis 11, wobei die Rastverbindung (30) die Reinigungseinrichtung (10; 10a) in einer in der Drehachse (37) verlaufenden Richtung an dem Wischarm (1) fixiert.

13. Scheibenwischanlage nach Anspruch 12,
**dadurch gekennzeichnet,**
**dass** die Reinigungseinrichtung (10; 10a) an einer Außenseite des Wischarms (1) angeordnet ist.

14. Scheibenwischanlage nach Anspruch 12 oder 13,
**dadurch gekennzeichnet,**
**dass** die Reinigungseinrichtung (10; 10a) im Bereich des Aufnahmebereichs (6) für das Wischblatt (2) angeordnet ist.

## Claims

1. A cleaning arrangement (10; 10a) for a wiper arm (1) of a windscreen wiper system (100), wherein the cleaning arrangement (10; 10a) has at least one spray nozzle (21, 22) for a cleaning fluid, wherein the cleaning arrangement (10; 10a) is constructed to form an engagement connection (30) at the wiper arm (1), and wherein the engagement connection (30) comprises at the cleaning arrangement (10; 10a) at least one resilient engagement element (40; 40a) which is constructed to cooperate with an engagement mount (54; 54a) at the wiper arm (1),
**characterized in that**
the cleaning arrangement (10; 10a) comprises first guide means (35), which first guide means (35) are constructed to establish the engagement connection (30) by rotating the cleaning arrangement (10; 10a) with respect to a rotation axis (37), and **in that** the first guide means (35) are constructed as at least one separate element from the at least one engagement element (40; 40a).

2. The cleaning arrangement according to Claim 1,
**characterized in that**
the first guide means (35) comprise at least one, preferably several extensions (32, 33) which are constructed to be insertable into a mount opening (46, 47) of the wiper arm (1).

3. The cleaning arrangement according to Claim 2,
**characterized in that**
at least two extensions (32, 33) are provided which are arranged on a common circle diameter (38) around the rotation axis (37) at preferably equal angular distances relative to each other.

4. The cleaning arrangement according to Claim 2 or 3,
**characterized in that**
the at least one extension (32, 33) comprises a head portion (36) with an increased cross-section, which head portion (36) is constructed to engage behind a wall (14) of the wiper arm (1).

5. The cleaning arrangement according to one of Claims 1 to 4,
**characterized in that**
the cleaning arrangement (10; 10a) is constructed as an injection moulded part comprising a plastics material, and **in that** the engagement element (40; 40a) is formed as an engagement projection (42; 42a) in one piece on the cleaning arrangement (10; 10a).

6. A wiper arm (1) for a cleaning arrangement (10; 10a) according to one of claims 1 to 5, with a mount region (6) for the fastening of a wiper blade (2) by means of a fastening arrangement (5) of the wiper blade (2), wherein the wiper arm (1) is designed to cooperate with the cleaning arrangement (10; 10a) to form an engagement connection (30), and wherein the engagement connection (30) comprises at the wiper arm (1) at least one engagement mount (54; 54a) which is designed to cooperate with at least one resiliently constructed engagement element (40; 40a) at the cleaning arrangement (10; 10a),
**characterized in that**
second guide means (52) are provided at the wiper arm (1), which second guide means (52) are designed to establish the engagement connection (30) by rotating the cleaning arrangement (10; 10a) with respect to a rotation axis (37), and **in that** the second guide means (52) are constructed as separate elements from the at least one engagement mount (54; 54a).

7. The wiper arm according to Claim 6,
**characterized in that**
the second guide means (52) comprise at least one mount opening (46, 47) which is constructed to cooperate with at least one extension (32, 33) at the cleaning arrangement (10; 10a).

8. The wiper arm according to Claim 7,
**characterized in that**
the at least one mount opening (46, 47) forms a guide path (51), preferably in the shape of a circular arc segment, for the at least one extension (32, 33).

9. The wiper arm according to Claim 7 or 8,
**characterized in that**
the at least one mount opening (46, 47) is formed on a wall (14) of the wiper arm (1), which wall (14) faces the cleaning arrangement (10; 10a).

10. The wiper arm according to one of Claims 6 to 9,
**characterized in that**
the engagement mount (54) is arranged on an underside (43) of the mount region (6) of the wiper arm (1), which underside faces the wiper blade (2).

11. The wiper arm according to one of Claims 7 to 9,
**characterized in that**
the engagement mount (54a) is arranged on a wall (14) of the mount region (6) of the wiper arm (1) in the region of a mount opening (46).

12. A windscreen wiper system (100), with a cleaning arrangement (10; 10a) according to one of Claims 1 to 5 and a wiper arm (1) according to one of Claims 6 to 11, wherein the engagement connection (30) fixes the cleaning arrangement (10; 10a) on the wiper arm (1) in a direction extending in the rotation axis (37).

13. The windscreen wiper system according to Claim 12,
**characterized in that**
the cleaning arrangement (10; 10a) is arranged on an outer side of the wiper arm (1).

14. The windscreen wiper system according to Claim 12 or 13,
**characterized in that**
the cleaning arrangement (10; 10a) is arranged in the region of the mount region (6) for the wiper blade (2).

## Revendications

1. Dispositif de nettoyage (10 ; 10a) pour un bras d'essuie-glace (1) d'une installation d'essuie-glace (100), le dispositif de nettoyage (10 ; 10a) présentant au moins une buse de pulvérisation (21, 22) pour un liquide de nettoyage, le dispositif de nettoyage (10 ; 10a) étant réalisé de manière à réaliser au niveau du bras d'essuie-glace (1) une connexion par encliquetage (30), et la connexion par encliquetage (30) au niveau du dispositif de nettoyage (10 ; 10a) présentant au moins un élément de pince sous la forme d'un élément d'encliquetage (40 ; 40a) réalisé sous forme élastique, qui est réalisé pour coopérer au niveau du bras d'essuie-glace (1) avec un logement d'encliquetage (54 ; 54a),
**caractérisé en ce que**
le dispositif de nettoyage (10 ; 10a) présente des premiers moyens de guidage (35) qui sont réalisés de manière à pouvoir faire tourner le dispositif de nettoyage (10 ; 10a) suivant un axe de rotation (37) pour réaliser la connexion par encliquetage (30), et
**en ce que** les premiers moyens de guidage (35) sont réalisés sous forme d'au moins un élément séparé de l'au moins un élément d'encliquetage (40 ; 40a) .

2. Dispositif de nettoyage selon la revendication 1,
**caractérisé en ce que**
les premiers moyens de guidage (35) présentent au moins une, de préférences plusieurs, saillies (32, 33) qui sont réalisées de manière à pénétrer dans une ouverture de réception (46, 47) du bras d'essuie-glace (1).

3. Dispositif de nettoyage selon la revendication 2,
**caractérisé en ce**
**qu'**au moins deux saillies (32, 33) sont prévues, lesquelles sont disposées sur un diamètre de cercle partiel commun (38) autour de l'axe de rotation (37) à intervalles angulaires de préférence identiques les unes par rapport aux autres.

4. Dispositif de nettoyage selon la revendication 2 ou 3,
**caractérisé en ce que**
l'au moins une saillie (32, 33) présente une région de tête (36) de section transversale agrandie, qui est réalisée pour venir en prise par l'arrière avec une paroi (14) du bras d'essuie-glace (1).

5. Dispositif de nettoyage selon l'une quelconque des revendications 1 à 4,
**caractérisé en ce que**
le dispositif de nettoyage (10 ; 10a) est réalisé sous la forme d'une pièce moulée par injection constituée de plastique et **en ce que** l'élément d'encliquetage (40 ; 40a) est façonné sous forme de saillie d'encliquetage (42 ; 42a) d'une seule pièce sur le dispositif de nettoyage (10 ; 10a).

6. Bras d'essuie-glace (1) pour un dispositif de nettoyage (10 ; 10a), réalisé selon l'une quelconque des revendications 1 à 5, comprenant une région de réception (6) pour la fixation d'un balai d'essuie-glace (2) au moyen d'un dispositif de fixation (5) du balai d'essuie-glace (2), le bras d'essuie-glace (1) étant réalisé de manière à réaliser avec le dispositif de nettoyage (10 ; 10a) une connexion par encliquetage (30), et la connexion par encliquetage (30) au niveau du bras d'essuie-glace (1) présentant au moins un logement d'encliquetage (54 ; 54a) qui est réalisé de manière à coopérer avec au moins un élément d'encliquetage (40 ; 40a) réalisé sous forme élastique au niveau du dispositif de nettoyage (10 ; 10a),
**caractérisé en ce que**
des deuxièmes moyens de guidage (52) sont prévus au niveau du bras d'essuie-glace (1), lesquels sont réalisés de manière à pouvoir faire tourner le dispositif de nettoyage (10 ; 10a) suivant un axe de rotation (37) pour réaliser la connexion par encliquetage (30) par rapport au bras d'essuie-glace (1) et **en ce que** les deuxièmes moyens de guidage (52) sont réalisés sous forme d'élément séparé de l'au moins un logement d'encliquetage (54 ; 54a).

7. Bras d'essuie-glace selon la revendication 6,
**caractérisé en ce que**
les deuxièmes moyens de guidage (52) présentent au moins une ouverture de réception (46, 47) qui est réalisée de manière à coopérer avec au moins une saillie (32, 33) au niveau du dispositif de nettoyage (10 ; 10a).

8. Bras d'essuie-glace selon la revendication 7,
**caractérisé en ce que**
l'au moins une ouverture de réception (46, 47) constitue une bande de guidage (51) de préférence en forme de portion d'arc de cercle pour l'au moins une saillie (32, 33).

9. Bras d'essuie-glace selon la revendication 7 ou 8,
**caractérisé en ce que**
l'au moins une ouverture de réception (46, 47) est réalisée au niveau d'une paroi (14) du bras d'essuie-glace (1) tournée vers le dispositif de nettoyage (10 ; 10a).

10. Bras d'essuie-glace selon l'une quelconque des revendications 6 à 9,
**caractérisé en ce que**
le logement d'encliquetage (54) est disposé au niveau d'un côté inférieur (43) de la région de réception (6) du bras d'essuie-glace (1) tourné vers le balai d'essuie-glace (2).

11. Bras d'essuie-glace selon l'une quelconque des revendications 7 à 9,
**caractérisé en ce que**
le logement d'encliquetage (54a) est disposé au niveau d'une paroi (14) de la région de réception (6) du bras d'essuie-glace (1) dans la région d'une ouverture de réception (46).

12. Installation d'essuie-glace (100), comprenant un dispositif de nettoyage (10 ; 10a) selon l'une quelconque des revendications 1 à 5 et un bras d'essuie-glace (1) selon l'une quelconque des revendications 6 à 11, la connexion par encliquetage (30) fixant le dispositif de nettoyage (10 ; 10a) au bras d'essuie-glace (1) dans une direction s'étendant suivant l'axe de rotation (37) .

13. Installation d'essuie-glace selon la revendication 12,
**caractérisée en ce que**
le dispositif de nettoyage (10 ; 10a) est disposé au niveau d'un côté extérieur du bras d'essuie-glace (1).

14. Installation d'essuie-glace selon la revendication 12 ou 13,
**caractérisée en ce que**
le dispositif de nettoyage (10 ; 10a) est disposé dans la région de la région de réception (6) pour le balai d'essuie-glace (2).
